# EUROPEAN PATENT APPLICATION

(11) **EP 2 685 420 A1**
(43) Date of publication of application: **15.01.2014**
(21) Application number: 11861215.9
(22) Date of filing: 22.03.2011
(51) Int. Cl.: G06T 1/00

(54) **IMAGE PROCESSING DEVICE, IMAGE PROCESSING METHOD AND CONTROL PROGRAM**

(30) Priority: 11.03.2011 JP 2011054649
(71) Applicant: Omron Corporation, Kyoto-shi, Kyoto 600-8530 (JP)
(72) Inventor: YAMASHITA, Takayoshi, Kyoto-shi, Kyoto 600-8530 (JP); RUAN, Xiang, Kyoto-shi, Kyoto 600-8530 (JP)
(74) Representative: Kilian Kilian & Partner
(86) International application number: PCT/JP2011/056827
(87) International publication number: WO 2012/124149

(57) **Abstract**

The purpose of the present invention is to efficiently retrieve an image that is intuitively thought to be similar to a query image by human beings. This image processing device (1) is provided with: a query image specification unit (21) which specifies a query image on the basis of a designation from a user; an object extraction unit (22) which extracts an object from the query image; a synthetic query image creation unit (25) which synthesizes a plurality of objects extracted by the object extraction unit (22) to thereby create a synthetic query image including the plurality of objects; and a retrieval unit (27) which retrieves an image similar to the synthetic query image.

## Description

### TECHNICAL FIELD

The present invention relates to an image processing device, an image processing method, and a control program for retrieval of an image.

### BACKGROUND ART

A technique of retrieving an image similar to a query image has been developed in recent years.

For example, Patent Document 1 describes a technique of performing edge detection in a query image and retrieving an image similar to the query image on the basis of a schematic image including only line segment information. More specifically, Patent Document 1 describes a schematic image creation device for calculating a broad threshold based on edge strength of an entire query image and a local threshold based on edge strength of a noted pixel and a pixel adjacent thereto included in the query image, determining whether or not the noted pixel is an edge based on a larger value in the broad threshold and the local threshold, and creating a schematic image from the query image.

Patent Document 2 describes an image processing device for combining a plurality of query images to perform retrieval, in which a logical expression prescribing combination of the query images can be designated through intuitive operation.

### PRIOR ART DOCUMENTS

### PATENT DOCUMENTS

Patent Document 1: Japanese Patent Publication JP 2806666 B1 (Published on September 30, 1998)
Patent Document 2: Japanese Unexamined Patent Publication JP 2010-250426 A (Published on November 4, 2010)

### NON-PATENT DOCUMENTS

Non-Patent Document 1: Laurent ltti and two others, "A Model of Saliency-Based Visual Attention for Rapid Scene Analysis", IEEE TRANSACTIONS ON PATTERN ANALYSIS AND MACHINE INTELLIGENCE, VOL. 20, NO. 11; NOVEMBER 1998
Non-Patent Document 2: "Digital image processing", Second Edition, Computer Graphic Arts Society, Incorporated Foundation, March 2, 2009, pp. 196-199

### SUMMARY OF THE INVENTION

### PROBLEMS TO BE SOLVED BY THE INVENTION

The conventional techniques described above, however, have the following problems, respectively.

For example, assume that a user trying to retrieve an image including a building A uses an image of the building A as a query image. Furthermore, assume that the image of the building A serving as the query image includes, in addition to the building A, a different body, a background, or the like. In this case, according to the technique described in Patent Document 1, a schematic image corresponds to an entire region (all pixels) of the image of the building A serving as the query image. The schematic image thus created includes information on the different body, the background, or the like, in addition to the building A.

Upon retrieving with use of the created schematic image, an image retrieval device utilising the technique described in Patent Document 1 retrieves any image including a body similar to the building A as well as retrieves any image inducing the different body, the background, or the like, other than the building A. In other words, the image retrieval device also retrieves any image other than the image similar to the building A as desired by the user. When utilising the technique described in Patent Document 1, there arises a problem that the image retrieval device perform unnecessary retrieval processing.

As described above, the image retrieval device utilizing the technique described in Patent Document 1 displays, as retrieval results, any image including a body similar to the building A as well as any image not including the building A but including a different body, a background, or the like other than the building A. A user thus has trouble in searching for an image including the building A out of the retrieval results.

Assume another case where, according to the technique described in Patent Document 2, a user trying to retrieve an image inducing flowers B and C uses an image of the flower B and an image of the flower C as query images. In this case, according to the technique described in Patent Document 2, once retrieved are any image including a body similar to the flower B and any image including a body similar to the flower C, and logical products of respective retrieval results are presented to a user. In other words, the image processing device described in Patent Document 2 also retrieves any image other than the image including a body similar to the flower B and a body similar to the flower C, as desired by the user. There arises a problem that the image processing device described in Patent Document 2 performs unnecessary retrieval.

Typically, there are not so many users who correctly understand a logical expression. A user who does not understand a logical expression fails to estimate retrieval results from combination of query images. According to the technique described in Patent Document 2, it is difficult for a user to intuitively retrieve with use of query images.

The present invention has been achieved in view of these problems, and it is an object thereof to achieve an image processing device, an image processing method, and a control program, for effectively retrieving an image intuitively considered to be similar to a query image by a human being.

### MEANS FOR SOLVING THE PROBLEMS

In order to achieve the object mentioned above, an image processing device according to the present invention includes: a query image specification means for specifying a query image in accordance with designation by a user; an object detection means for detecting an object in the query image; a synthetic query image generation means for synthesizing a plurality of objects in the objects detected by the object detection means to generate a synthetic query image including the plurality of objects; and an image retrieval means for retrieving an image similar to the synthetic query image based on the synthetic query image.

In order to achieve the object mentioned above, an image processing method according to the present invention includes: a query image specification step of specifying a query image in accordance with designation by a user; an object detection step of detecting an object in the query image; a synthetic query image generation step of synthesizing a plurality of objects in the objects detected in the object detection step to generate a synthetic query image inducing the plurality of objects; and an image retrieval step of retrieving an image similar to the synthetic query image based on the synthetic query image.

When retrieving an image similar to one or a plurality of query images including a plurality of objects, the user is typically expected to search for an image similar to an image including the plurality of objects included in these query images.

The object detection means detects an object in a query image specified by the query image specification means in accordance with designation by a user. The synthetic query image generation means synthesizes a plurality of objects in the objects detected by the object detection means to generate a synthetic query image including the plurality of objects. The image retrieval means retrieves an image similar to the synthetic query image based on the synthetic query image.

The object can be thus automatically detected in the query image designated by the user. An image searched for by the user can be efficiently retrieved by retrieval with use of the synthetic query image including the objects detected in the query image. In other words, the image processing device can cut unnecessary retrieval processing.

With use of the synthetic query image including the plurality of objects upon retrieving an image similar to the query image based on the query image, the user has only to designate the query image so as to intuitively retrieve a desired image effectively.

With use of the synthetic query image including the plurality of objects, retrieval is performed not for each object but for each synthetic query image including the plurality of objects. This leads to reduction in processing load to the image processing device.

### EFFECTS OF THE INVENTION

As described above, an image processing device according to the present invention includes: a query image specification means for specifying a query image in accordance with designation by a user; an object detection means for detecting an object in the query image; a synthetic query image generation means for synthesizing a plurality of objects in the objects detected by the object detection means to generate a synthetic query image including the plurality of objects; and an image retrieval means for retrieving an image similar to the synthetic query image based on the synthetic query image.

Furthermore, an image processing method according to the present invention includes: a query image specification step of specifying a query image in accordance with designation by a user; an object detection step of detecting an object in the query image; a synthetic query image generation step of synthesizing a plurality of objects in the objects detected in the object detection step to generate a synthetic query image including the plurality of objects; and an image retrieval step of retrieving an image similar to the synthetic query image based on the synthetic query image.

With use of the synthetic query image including the plurality of objects upon retrieving an image similar to the query image based on the query image, there achieved an effect that the user has only to designate the query image so as to intuitively retrieve a desired image.

Other object, feature, and advantage of the present invention will be fully understood from the following description. The benefit of the present invention will be also apparent from the following illustration with reference to the accompanying drawings.

### BRIEF DESCRIPTION OF THE DRAWINGS

Fig. 1 is a block diagram according to an embodiment of the present invention, exemplifying a configuration of a principal part in an image processing device.
Fig. 2 is a view showing an outline of the present invention.
Figs. 3(a) and 3(b) are views of synthetic query images adjusted in position and/or in size by a synthetic query image adjustment unit of the image processing device.
Fig. 4 is a flowchart exemplifying image retrieval processing by the image processing device.
Figs. 5(a) to 5(d) are views exemplifying display screens displayed on a display unit of the image processing device during the image retrieval processing.
Figs. 6(a) to 6(d) are views exemplifying display screens displayed on the display unit of the image processing device during the image retrieval processing.
Figs. 7(a) and 7(b) are views exemplifying different display screens displayed on the display unit of the image processing device during the image retrieval processing.

### MODE FOR CARRYING OUT THE INVENTION

### [Outline]

An image processing device according to the present invention generates retrieval image information (a synthetic query image) used for retrieving an image similar to one or a plurality of query images designated by a user based on the query image or images.

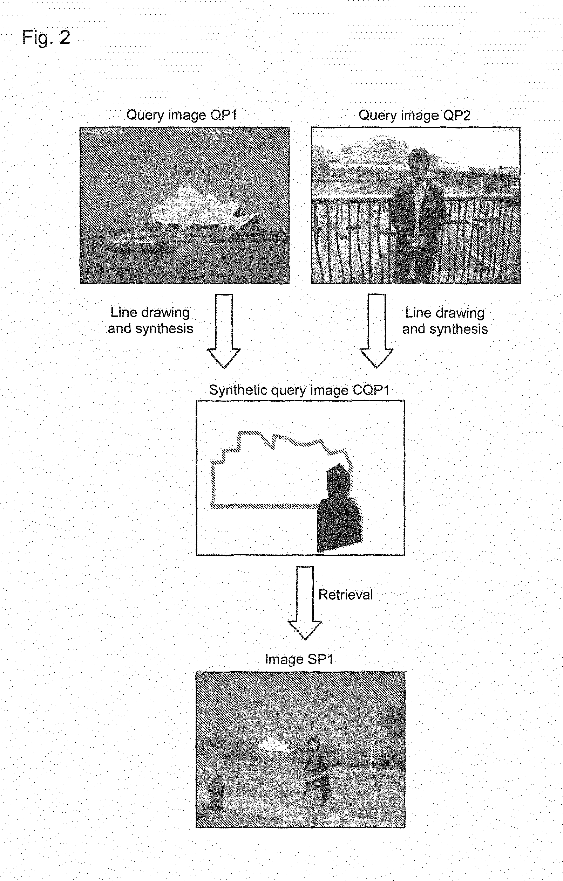

More specifically, as shown in Fig. 2, assume that a user selects as query images an image QP1 including a building D and an image QP2 including a person E upon searching for an image such as an image SP1 including the person E in front of the building D. In this case, the image processing device according to the present invention extracts information indicating the building D and information indicating the person E from the images QP1 and QP2, respectively. The image processing device according to the present invention subsequently synthesizes the pieces of extracted information into an image to create a synthetic query image CQP1 serving as a retrieval image used for retrieving the image SP1.

The image processing device according to the present invention then retrieves an image similar to the synthetic query image CQP1 thus created and displays results of the retrieval. The user selects a desired image from the displayed retrieval results.

In this manner, the image processing device according to the present invention creates the synthetic query image CQP1 similar to the image SP1 desired by the user from the query images (P1 and P2) designated by the user.

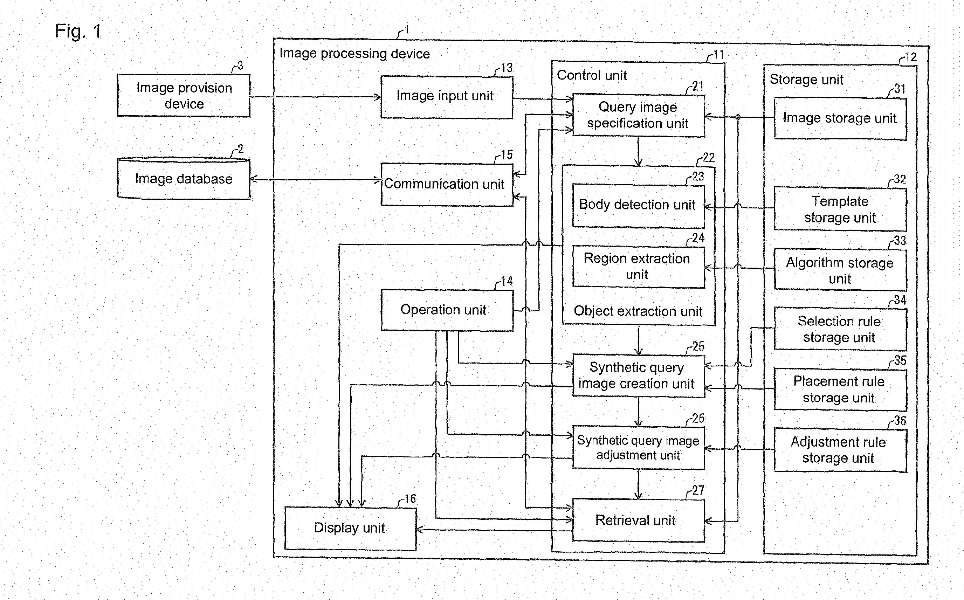

An embodiment of the present invention is described below based on Figs. 1 to 7(b).

### [Configuration of image processing device]

Fig. 1 is a block diagram exemplifying a configuration of a principal part in an image processing device 1. As shown in Fig. 1, the image processing device 1 includes a control unit 11, a storage unit 12, an image input unit 13, an operation unit (input means) 14, a communication unit 15, and a display unit 16. The image processing device 1 can include members such as a sound input unit and a sound output unit. These members are not shown because they are irrelevant to the features of the invention.

The image input unit 13 obtains an image from an image provision device 3. The image provision device 3 is not particularly limited as long as it provides a different device with an image stored therein or an image having been obtained. Examples of the image provision device 3 include a digital camera, a digital television, a PC, a mobile phone, a personal digital assistant (PDA), a game machine, and a storage device such as a universal serial bus (USB) memory.

The operation unit 14 is used by a user to input a command signal to the image processing device 1 to operate the image processing device 1. The operation unit 14 can be configured by an input device or the like, such as a keyboard, a mouse, a keypad, or an operation button. The operation unit 14 and the display unit 16 can be provided integrally as a touch panel. The operation unit 14 can be provided separately from the image processing device 1, as a remote control device such as a remote controller.

The communication unit 15 communicates with a different device such as an image database 2 with use of a wireless communication means or a wired communication means to transmit or receive data in accordance with a command from the control unit 11. For example, the communication unit 15 obtains an image from the image database 2 in accordance with a command from the control unit 11.

The image database 2 is a storage device, a web server, or the like, holding images.

The display unit 16 displays an image in accordance with a command from the control unit 11. The display unit 16 is not particularly limited as long as it displays an image in accordance with a command from the control unit 11, and for example, a liquid crystal display (LCD), an organic EL display, a plasma display, or the like can be applied.

The control unit 11 executes a program read out of the storage unit 12 to a temporary storage unit (not shown) so as to perform various calculations and integrally control each unit include in the image processing device 1.

The control unit 11 according to the present embodiment includes, as functional blocks, a query image specification unit (query image specification means) 21, an object extraction unit (object detection means) 22, a synthetic query image creation unit (synthetic query image generation means) 25, a synthetic query image adjustment unit (synthetic query image adjustment means) 26, and a retrieval unit (image retrieval means) 27. These functional blocks (21, 22, and 25 to 27) in the control unit 11 can be each embodied by a central processing unit (CPU) reading out a program stored in a storage device embodied by such as a read only memory (ROM) to the temporary storage unit embodied by such as a random access memory (RAM) and executing the program.

The query image specification unit 21 specifies an image designated by a user as a query image. More specifically, when a user designates an image displayed on the display unit 16 with use of the operation unit 14, the query image specification unit 21 obtains from the operation unit 14, information indicating the image designated by the user, and specifies an image indicated by the obtained information as a query image.

The user can designate one or a plurality of images as query image or images. In other words, the query image specification unit 21 can specify one or a plurality of images (query image or images).

An "image displayed on the display unit 16" mentioned above may be, for example, an image obtained by the control unit 11 from the image provision device 3 by way of the image input unit 13 and the thus obtained image being displayed on the display unit 16. Alternatively, such an image can be obtained by the control unit 11 from the image database 2 by way of the communication unit 15 to display the obtained image on the display unit 16 in such a case where a user browses on the web. Still alternatively, such an image can be read by the control unit 11 out of an image storage unit 31 and be displayed on the display unit 16.

A user does not necessarily select a query image from images displayed on the display unit 16. For example, the user can designate a directory address or the like of image data in the image database 2, the image provision device 3, or the image storage unit 31 to designate an image held in the image database 2, the image provision device 3, or the image storage unit 31 as a query image.

The query image specification unit 21 obtains the specified image (query image) from the image input unit 13, from the image database 2 by way of the communication unit 15, or from the image storage unit 31. The query image specification unit 21 outputs the obtained query image to the object extraction unit 22.

The object extraction unit 22 obtains the query image from the query image specification unit 21, detects an object in the obtained query image, and extracts the detected object. The object extraction unit 22 generates object information indicating the extracted object and outputs the generated object information to the synthetic query image creation unit 25.

Upon generation of object information, the object extraction unit 22 can also add to the object information, as additional information on each object, positional information and size information respectively indicating a position and a size of the object in the query image.

An object here include a body such as a building or a person, a background such as the sea or the sky at sunset, an abstract figure such as "○" or "Δ", or the like. Object information can be information indicating a pixel value of a pixel group in a region of the object in an image, or information indicating a feature value of the object such as edge information indicating an edge (outline) of the object. Additional information on the object may not necessarily include both of positional information and size information, but has only to include at least one of them.

The object extraction unit 22 includes a body detection unit 23 and a region extraction unit 24. More particularly, the body detection unit 23 and the region extraction unit 24 generate object information.

The body detection unit 23 reads out of the storage unit 12 an image template as a standard image of an object, executes matching between the query image and the image template, and determines whether or not the query image includes an object same as that of the matched image template. When determining that an object same as that of the matched image template is included, the body detection unit 23 extracts the object from the query image and generates object information indicating the extracted object.

The body detection unit 23 also reads out of the storage unit 12 a feature value template indicating a feature value of the standard image of the object, and calculates a feature value of the query image, so as to execute matching between the feature value of the query image and the feature value template. The body detection unit 23 then determines whether or not the query image includes an object same as the object having the feature value indicated by the matched feature value template. When determining that an object same as the object having the feature value indicated by the matched feature value template is included, the body detection unit 23 extracts the object from the query image and generates object information indicating the extracted object.

The body detection unit 23 can detect, for example a face, a person (physical body), a pet, a vehicle, or the like, or can specify and detect an individual body (such as an individual person). The body detection unit 23 can detect a background (scene) such as the sea, a mountain, or the sky at sunset.

If the image template or the feature value template is corresponded to a name of the object indicated by the template, the body detection unit 23 can add to the object information indicating the extracted object, as additional information, object name information indicating the name of the object.

The region extraction unit 24 extracts a featured region (pixel group) from the query image in accordance with an algorithm such as a saliency map (see Non-Patent Document 1) or region segmentation processing (segmentation: see Non-Patent Document 2), specifies the extracted region as a region of the object, and generates object information.

In a case of using a saliency map, the region extraction unit 24 generates, from the query image, feature maps each indicating contrast in feature value such as a color, brightness, or an edge, averages each pixel in each feature map to generate a saliency map (SM), and extracts a region having high contrast (for example, a pixel group having a pixel value not less than a predetermined value) in the SM. A saliency map is obtained by modeling human visual processing. It is possible to automatically specify a region easily noted (considered to be noted) by a human being by extracting a region with use of a saliency map.

Region segmentation processing can be specifically executed by integration of adjacent pixels, by classifying pixel feature values, by a technique called snakes using an edge, or the like.

The synthetic query image creation unit 25 selects one or a plurality of objects from the objects indicated by the object information generated by the object extraction unit 22, and pastes the selected object to a blank image so as to create a synthetic query image.

The synthetic query image creation unit 25 can select an object in accordance with a command inputted to the operation unit 14 by a user or in accordance with a predetermined selection rule set preliminarily.

The selection rule can be, for example applied to all combinations of objects, all combinations of two or more objects, all combinations of three or more objects, or the like.

More specifically, assume a case where the object extraction unit 22 generates pieces of object information indicating three objects of "L", "M", and "N", respectively. In this case, the synthetic query image creation unit 25 can select seven combinations of "L", "M", "N", "L and M", "M and N", "N and L", and "L, M, and N" to create seven synthetic query images.

There can be preliminarily set a rule of excluding a combination of each object. In a case where a rule of excluding a combination of each object is set to exclude the combination of "M and N", for example, six combinations of "L", "M", "N", "L and M", "N and L", and "L, M, and N" are selected in accordance with this selection rule (in this case, "L, M, and N" can be excluded because it also includes the combination of "M and N"). The body detection unit 23 is assumed to specify names of at least the objects "M" and "N" in this case.

If the object information indicating the selected object has additional information, the synthetic query image creation unit 25 decides a position and a size of the object in the blank image in accordance with the position and the size indicated by the positional information and the size information in the additional information. On the other hand, if the object information does not have additional information, the synthetic query image creation unit 25 decides a position and a size of the object in the blank image in accordance with a predetermined placement rule set preliminarily. Examples of the placement rule include segmenting the blank image into the number of the selected objects and placing each object so as to be accommodated in each segmented region.

The synthetic query image creation unit 25 outputs to the synthetic query image adjustment unit 26, synthetic query image information indicating the created synthetic query image.

The synthetic query image adjustment unit 26 adjusts the position and the size, in the synthetic query image created by the synthetic query image creation unit 25, of the object includes in the synthetic query image. The synthetic query image adjustment unit 26 outputs to the retrieval unit 27 the synthetic query image information indicating the synthetic query image adjusted in position and in size.

The synthetic query image adjustment unit 26 can adjust the position and the size of the object in the synthetic query image in accordance with a command inputted to the operation unit 14 by a user or in accordance with a predetermined adjustment rule set preliminarily.

Examples of the adjustment rule includes, for example placing an object of a person in front of an object of a building in a case where the body detection unit 23 specifies names of objects included in a synthetic query image.

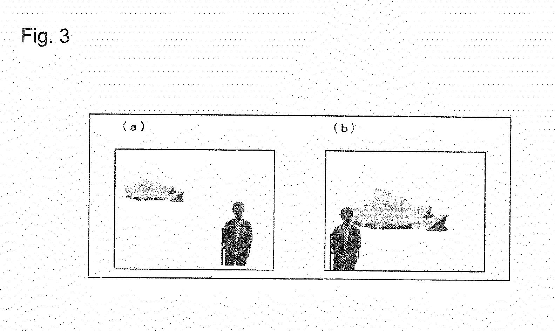

For example, the synthetic query image adjustment unit 26 adjusts positions and/or sizes of objects in a synthetic query image, from the synthetic query image CQP1 shown in Fig. 2 to the synthetic query image shown in Fig. 3(a) or 3(b).

The retrieval unit 27 obtains the synthetic query image information from the synthetic query image adjustment unit 26 and retrieves an image similar to the synthetic query image indicated by the obtained synthetic query image information from the images held in the image database 2 and/or the image storage unit 31.

The retrieval unit 27 causes results of the retrieval to be displayed on the display unit 16 so that an image more similar to the synthetic query image is displayed at an upper rank in the retrieval results. If an index indicating a level of similarity to a synthetic query image is referred to as a similarity degree, the retrieval unit 27 causes an image of higher similarity degree to be displayed at an upper rank in the retrieval results.

The retrieval unit 27 can decide a similarity degree of each retrieval target image to the synthetic query image based on the position and/or the size of the object in the synthetic query image. More specifically, if there are a plurality of retrieval target images each including an object same as the object included in the synthetic query image, a retrieval target image can have a higher similarity degree as the position or the size of the object in the retrieval target image is closer to the position or the size of the object in the synthetic query image.

If there are a plurality of synthetic query images, the retrieval unit 27 can retrieve only in synthetic query images selected (designated) by a user with use of the operation unit 14.

The storage unit 12 stores a program, data, and the like to be referenced by the control unit 11, and includes the image storage unit 31, a template storage unit 32, an algorithm storage unit 33, a selection rule storage unit 34, a placement rule storage unit 35, and an adjustment rule storage unit 36.

The image storage unit 31 stores an image designated as a query image by a user, a retrieval target image to be retrieved by the retrieval unit 27 based on a synthetic query image, and the like.

The template storage unit 32 stores an image template and a feature value template to be used by the body detection unit 23 upon detecting a body.

The algorithm storage unit 33 stores the algorithm described above to be used by the region extraction unit 24 upon extracting a predetermined region.

The selection rule storage unit 34 stores a selection rule to be used by the synthetic query image creation unit 25 upon automatically selecting an object.

The placement rule storage unit 35 stores a placement rule to be used by the synthetic query image creation unit 25 upon automatically deciding placement of an object.

The adjustment rule storage unit 36 stores an adjustment rule to be used by the synthetic query image adjustment unit 26 upon automatically adjusting a position and a size of an object.

### [Image retrieval processing]

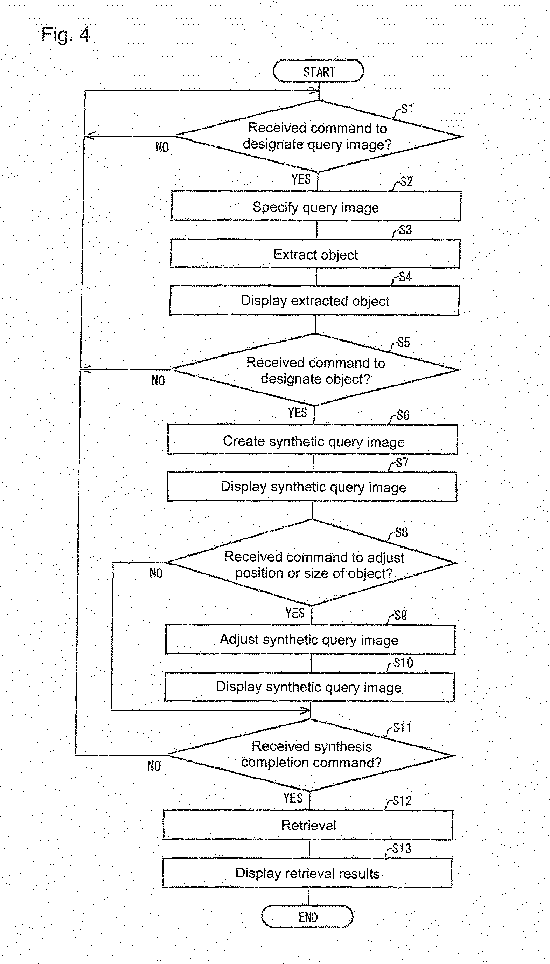

Image retrieval processing in the image processing device 1 is described next based on Fig. 4. Fig. 4 is a flowchart exemplifying image retrieval processing in the image processing device 1. In the processing exemplified in Fig. 4, the synthetic query image creation unit 25 and the synthetic query image adjustment unit 26 create and adjust a synthetic query image in accordance with a command from a user.

As shown in Fig. 4, the query image specification unit 21 stands by until input, to the operation unit 14, of a command to designate an image as a query image (S1). If operation of specifying an image as a query image is inputted by a user browsing on the web or the like (YES in S1), the query image specification unit 21 specifies the image designated by the user as the query image in accordance with the inputted command (S2). The query image specification unit 21 then outputs the specified query image to the object extraction unit 22.

The object extraction unit 22 obtains the query image from the query image specification unit 21 and extracts an object from the obtained query image (S3). The object extraction unit 22 then causes the extracted object to be displayed on the display unit 16 (S4). The object extraction unit 22 also generates object information indicating the extracted object and outputs the generated object information to the synthetic query image creation unit 25.

The synthetic query image creation unit 25 subsequently stands by until input of a user's command to select an object to be added in a synthetic query image from objects displayed on the display unit 16 (S5). If there is no input of a user's command for a predetermined period or there is inputted a command to add none of the objects displayed on the display unit 16 in the synthetic query image (NO in S5), the process returns to S1 so as to stand by until designation of a query image.

On the other hand, if there is inputted a command to select an object (YES in S5), the synthetic query image creation unit 25 pastes the object designated by the user to a blank image in accordance with the inputted command so as to create a synthetic query image (S6). The synthetic query image creation unit 25 then causes the created synthetic query image to be displayed on the display unit 16 (S7). The synthetic query image creation unit 25 also outputs to the synthetic query image adjustment unit 26, synthetic query image information indicating the created synthetic query image.

The synthetic query image adjustment unit 26 subsequently stands by until input of a command to adjust the position or the size of the object in the synthetic query image (S8). If there is no input of a user's command for a predetermined period or there is inputted a command to adjust none of the position and the size of the object (NO in S8), the synthetic query image adjustment unit 26 outputs to the retrieval unit 27 the synthetic query image information indicating the synthetic query image.

On the other hand, if there is inputted a command to adjust the position or the size of the object (YES in S8), the synthetic query image adjustment unit 26 adjusts the position or the size of the object designated by the user in the synthetic query image in accordance with the inputted command (S9). The synthetic query image adjustment unit 26 then causes an adjusted synthetic query image to be displayed on the display unit 16 (S10). The synthetic query image adjustment unit 26 also outputs to the retrieval unit 27, synthetic query image information indicating the adjusted synthetic query image.

The retrieval unit 27 obtains the synthetic query image information from the synthetic query image adjustment unit 26, and then stands by until input of a synthesis completion command to the operation unit 14 by the user (S11). If the user inputs not a synthesis completion command but a command to add a query image (NO in S11), the process returns to S1 so as to stand by until designation of a query image.

On the other hand, if there is inputted a synthesis completion command (YES in S11), the retrieval unit 27 retrieves an image similar to the synthetic query image indicated by the obtained synthetic query image information from the images held in the image database 2 and/or the image storage unit 31 (S12). The retrieval unit 27 then causes results of the retrieval to be displayed on the display unit 16 (S13).

In a case where each of the synthetic query image creation unit 25 and the synthetic query image adjustment unit 26 automatically performs processing not in accordance with a user's command, there is no need of the judgment processing in S5 and S8. Furthermore, in this case, there is no need to display any object or any synthetic query image on the display unit 16 in S4, S7, and S10.

### [Display screen example 1]

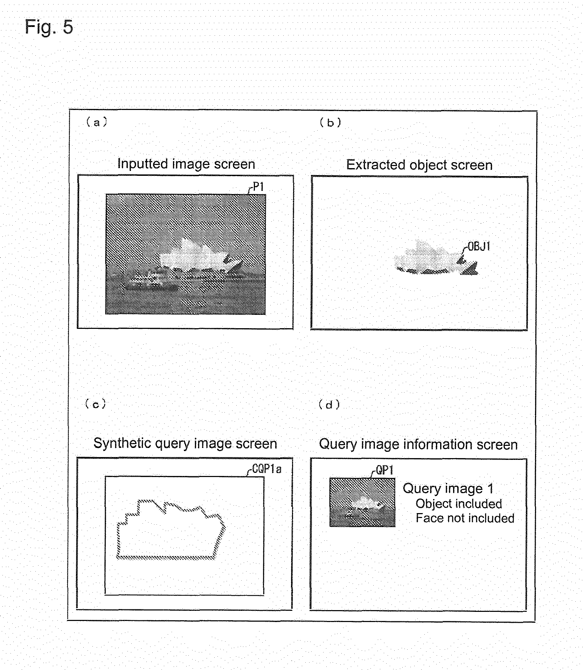

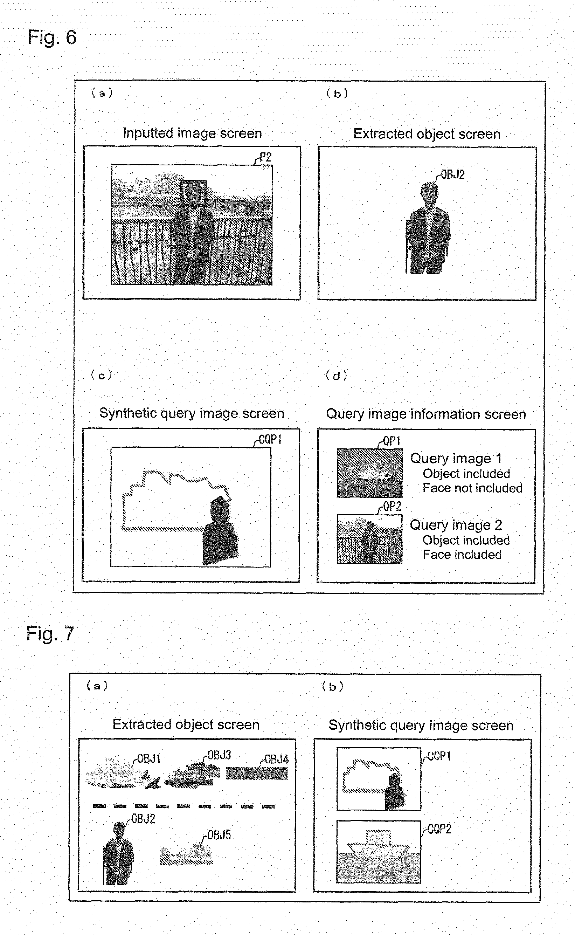

Examples of display screens displayed on the display unit 16 during the image retrieval processing are described next based on Figs. 5(a) to 5(d) and 6(a) to 6(d). Figs. 5(a) to 5(d) and 6(a) to 6(d) exemplify the display screens displayed on the display unit 16 during the image retrieval processing. In the examples shown in Figs. 5(a) to 5(d) and 6(a) to 6(d), assume that a user selects, as a query image, an image obtained by the image input unit 13 from the image provision device 3. Furthermore, assume that the object extraction unit 22 extracts one object that is most featured in each query image and the synthetic query image creation unit 25 selects an object to be pasted in accordance with a user's command.

As shown in Fig. 5(a), the control unit 11 initially causes an inputted image P1 obtained by the image input unit 13 from the image provision device 3 to be displayed on the display unit 16. If the user selects with use of the operation unit 14 the inputted image P1 displayed on the display unit 16 as a query image, the query image specification unit 21 specifies the inputted image P1 as a query image QP1.

The object extraction unit 22 then extracts an object OBJ1 from the query image QP1 and causes the extracted object OBJ1 to be displayed on the display unit 16 as shown in Fig. 5(b). If the user selects with use of the operation unit 14 the object OBJ1 displayed on the display unit 16 as to be included in the synthetic query image, the synthetic query image creation unit 25 pastes the object OBJ1 to a blank image so as to create a synthetic query image CQP1a.

As shown in Fig. 5(c), the synthetic query image creation unit 25 causes the created synthetic query image CQP1a to be displayed on the display unit 16. In the example shown in Fig. 5(c), the object OBJ1 included in the synthetic query image CQP1a is indicated by line drawing, although the manner of indication is not limited thereto. For example, as shown in Fig. 5(b), the image extracted from the query image QP1 can be displayed as it is.

Furthermore, the user here performing an operation to switch screen-display, the control unit 11 causes information on the query image used for creating the synthetic query image to be displayed, as shown in Fig. 5(d). In the example shown in Fig. 5(d), the control unit 11 causes a thumbnail image of the query image QP1, whether or not there is any object extracted from the query image QP1, and whether or not there is any face detected, to be displayed on the display unit 16.

Assume that the synthetic query image creation unit 25 creates the synthetic query image CQP1a shown in Fig. 5(c) and then the image input unit 13 obtains an inputted image P2 from the image provision device 3. As described above, the control unit 11 causes the inputted image P2 obtained by the image input unit 13 to be displayed on the display unit 16, as shown in Fig. 6(a). If the user here selects with use of the operation unit 14 the inputted image P2 displayed on the display unit 16 as a query image, the query image specification unit 21 specifies the inputted image P2 as a query image QP2.

The object extraction unit 22 then extracts an object OBJ2 from the query image QP2 and causes the extracted object OBJ2 to be displayed on the display unit 16 as shown in Fig. 6(b). If the user selects with use of the operation unit 14 the object OBJ2 displayed on the display unit 16 as to be included in the synthetic query image, the synthetic query image creation unit 25 pastes the object OBJ2 to the synthetic query image CQP1a created earlier so as to create a synthetic query image CQP1.

As shown in Fig. 6(c), the synthetic query image creation unit 25 causes the created synthetic query image CQP1 to be displayed on the display unit 16. Furthermore, the user here performing the operation to switch screen-display, the control unit 11 causes information on the query image used for creating the synthetic query image to be displayed, as shown in Fig. 6(d). Information on the query images QP1 and QP2 is displayed in the example shown in Fig. 6(d).

### [Display screen example 2]

Other examples of display screens displayed on the display unit 16 during the image retrieval processing are described next based on Figs. 7(a) and 7(b). Figs. 7(a) and 7(b) exemplify the different display screens displayed on the display unit 16 during the image retrieval processing. In the examples shown in Figs. 7(a) and 7(b), assume that a user selects, as query images, the images P1 and P2 obtained by the image input unit 13 from the image provision device 3. Furthermore, assume that the object extraction unit 22 extracts a plurality of objects from the respective query images and the synthetic query image creation unit 25 automatically selects objects to create a synthetic query image.

The object extraction unit 22 extracts objects from each of the query images QP1 and QP2, and causes objects OBJ1, OBJ3, and OBJ4 extracted from the query image QP1 and objects OBJ2 and OBJ5 extracted from the query image QP2 to be displayed on the display unit 16, as shown in Fig. 7(a).

The synthetic query image creation unit 25 then automatically selects objects from the objects OBJ1 to 5 to create a synthetic query image CQP1 including the objects OBJ1 and OBJ2 and a synthetic query image CQP2 including the objects OBJ3 and OBJ4. As shown in Fig. 7(b), the synthetic query image creation unit 25 causes the created synthetic query images CQP1 and CQP2 to be displayed on the display unit 16.

### [Means for solving the problems]

In order to achieve the object mentioned above, an image processing device according to the present invention includes: a query image specification means for specifying a query image in accordance with designation by a user; an object detection means for detecting an object in the query image; a Synthetic query image generation means for synthesizing a plurality of objects in the objects detected by the object detection means to generate a synthetic query image including the plurality of objects; and an image retrieval means for retrieving an image similar to the synthetic query image based on the synthetic query image.

In order to achieve the object mentioned above, an image processing method according to the present invention includes: a query image specification step of specifying a query image in accordance with designation by a user; an object detection step of detecting an object in the query image; a synthetic query image generation step of synthesizing a plurality of objects in the objects detected in the object detection step to generate a synthetic query image including the plurality of objects; and an image retrieval step of retrieving an image similar to the synthetic query image based on the synthetic query image.

When retrieving an image similar to one or a plurality of query images including a plurality of objects, the user is typically expected to search for an image similar to an image including the plurality of objects included in these query images.

The object detection means detects an object in a query image specified by the query image specification means in accordance with designation by a user. The synthetic query image generation means synthesizes a plurality of objects in the objects detected by the object detection means to create a synthetic query image including the plurality of objects. The image retrieval means retrieves an image similar to the synthetic query image based on the synthetic query image.

The object can be thus automatically detected in the query image designated by the user. An image searched for by the user can be efficiently retrieved by retrieval with use of the synthetic query image including the objects detected in the query image. In other words, the image processing device can cut unnecessary retrieval processing.

With use of the synthetic query image including the plurality of objects upon retrieving an image similar to the query image based on the query image, there achieved an effect that the user has only to designate the query image so as to intuitively retrieve a desired image.

With use of the synthetic query image including the plurality of objects, retrieval is performed not for each object but for each synthetic query image including the plurality of objects. This leads to reduction in processing load to the image processing device.

Preferably, the image processing device according to the present invention further includes a synthetic query image adjustment means for adjusting at least one of a position and a size of the object in the synthetic query image, and the image retrieval means retrieves an image similar to a synthetic query image adjusted by the synthetic query image adjustment means.

Upon judging whether or not two images are similar to each other, a user typically compares positions and/or sizes of objects included in the respective images with each other to judge.

In the above configuration, the synthetic query image adjustment means adjusts, in the synthetic query image generated by the synthetic query image generation means, at least one of the position and the size of the object included in the synthetic query image. The image retrieval means then retrieves an image similar to the synthetic query image adjusted by the synthetic query image adjustment means. It is thus possible to retrieve an image that is similar to the synthetic query image and includes an object similar in position and/or in size to the object in the synthetic query image. Consequently, an image intuitively considered to be similar by a user can be retrieved more effectively and efficiently.

Preferably, the image processing device according to the present invention further includes an input means for receiving input by a user, and the synthetic query image generation means selects a plurality of objects from the objects detected by the object detection means in accordance with a command inputted to the input means and synthesizes the plurality of selected objects.

In the above configuration, the synthetic query image generation means selects a plurality of objects from the objects detected by the object detection means in accordance with a user's command inputted to the input means and synthesizes the plurality of selected objects. The synthetic query image generation means is thus capable of selecting objects similar to the objects included in the image searched for by the user. It is accordingly possible to generate a synthetic query image including objects similar to the objects included in the image searched for by the user. Consequently, an image similar to the image searched for by the user can be retrieved more effectively and efficiently.

Preferably, the image processing device according to the present invention further includes an input means for receiving input by a user, and the synthetic query image adjustment means adjusts at least one of the position and the size of the object in the synthetic query image in accordance with a command inputted to the input means.

In the above configuration, the synthetic query image adjustment means adjusts at least one of the position and the size of the object in the synthetic query image generated by the synthetic query image generation means in accordance with a user's command inputted to the input means. It is thus possible to generate a synthetic query image including an object similar in position and/or in size in the image to the object included in the image searched for by the user. Consequently, an image similar to the image searched for by the user can be retrieved more effectively and efficiently.

The image processing device can be embodied by a computer. In this case, a control program that embodies the image processing device by the computer being operated as the respective means in the image processing device, and a computer-readable storage medium storing the control program are also included in the scope of the present invention.

### [Supplementary]

The present invention is not limited to the embodiment described above, but can be modified variously within the scope defined by the claims. More specifically, any embodiment achieved by combining technical means appropriately modified within the scope defined by the claims will be also included in the technical scope of the present invention.

Lastly, each block in the image processing device 1, particularly the control unit 11, can be configured in accordance with the hardware logic, or can be embodied by software with use of a CPU in the following manner.

More specifically, the image processing device 1 includes a CPU for executing a command from a control program achieving each function, a ROM storing the program, a RAM for developing the program, a storage device (recording medium) such as a memory storing the program and various types of data, and the like. The object of the present invention can be also achieved by supplying to the image processing device 1 the recording medium recording program codes (an execute form program, an intermediate code program, and a source program) of the control program for the image processing device 1, serving as software for achieving the functions described above, so as to be readable with a computer, and by reading out to execute the program codes recorded in the recording medium with use of the computer (alternatively, a CPU or an MPU).

Examples of the recording medium include tapes such as a magnetic tape and a cassette tape, disks including magnetic disks such as a floppy (registered trademark) disk and a hard disk and optical disks such as a CD-ROM, an MO, an MD, a DVD, and a CD-R, cards such as IC cards (including a memory card) and optical cards, and semiconductor memories such as a mask ROM, an EPROM, an EEPROM, and a flash ROM.

The image processing device 1 can be alternatively configured so as to be connectable with a communication network, so that the program codes are supplied via the communication network. The communication network is not particularly limited, and it is possible to use, for example the internet, an intranet, an extranet, a LAN, an ISDN, a VAN, a CATV communication network, a virtual private network, a telephone network, a mobile communication network, a satellite communication network, or the like. There is no particular limitation to a transmission medium configuring the communication network, and it is possible to use, for example a wired transmission medium such as IEEE 1394, a USB, a power-line carrier, a cable TV circuit, a telephone wire, or an ADSL, as well as a wireless transmission medium such as infrared like the IrDA and a remote controller, Bluetooth (registered trademark), 802.11 radio, an HDR, a mobile telephone network, a satellite circuit, or a digital terrestrial network. The present invention can be also achieved in the form of computer data signals embedded in carrier waves. In this case, the program codes are embodied by electronic transmission.

### INDUSTRIAL APPLICABILITY

The present invention is applicable to an image processing device for retrieving an image similar to a query image.

### DESCRIPTION OF SYMBOLS

- 1: Image processing device
- 14: Operation unit (input means)
- 21: Query image specification unit (Query image specification means)
- 22: Object extraction unit (Object detection means)
- 25: Synthetic query image creation unit (Synthetic query image generation means)
- 26: Synthetic query image adjustment unit (Synthetic query image adjustment means)
- 27: Retrieval unit (Image retrieval means)

## Claims

1. An image processing device comprising:
a query image specification means for specifying a query image in accordance with designation by a user;
an object detection means for detecting an object in the query image;
a synthetic query image generation means for synthesizing a plurality of objects in the objects detected by the object detection means to generate a synthetic query image including the plurality of objects; and
an image retrieval means for retrieving an image similar to the synthetic query image based on the synthetic query image.

2. The image processing device according to claim 1, further comprising:
a synthetic query image adjustment means for adjusting at least one of a position and a size of the object in the synthetic query image; wherein
the image retrieval means retrieves an image similar to a synthetic query image adjusted by the synthetic query image adjustment means.

3. The image processing device according to claim 1 or 2, further comprising:
an input means for receiving input by a user; wherein
the synthetic query image generation means selects a plurality of objects from the objects detected by the object detection means in accordance with a command inputted to the input means and synthesizes the plurality of selected objects.

4. The image processing device according to claim 2, further comprising:
an input means for receiving input by a user; wherein
the synthetic query image adjustment means adjusts at least one of the position and the size of the object in the synthetic query image in accordance with a command inputted to the input means.

5. An image processing method comprising:
a query image specification step of specifying a query image in accordance with designation by a user;
an object detection step of detecting an object in the query image;
a synthetic query image generation step of synthesizing a plurality of objects in the objects detected in the object detection step to generate a synthetic query image including the plurality of objects; and
an image retrieval step of retrieving an image similar to the synthetic query image based on the synthetic query image.

6. A control program for causing a computer to execute an image processing method including:
a query image specification step of specifying a query image in accordance with designation by a user;
an object detection step of detecting an object in the query image;
a synthetic query image generation step of synthesizing a plurality of objects in the objects detected in the object detection step to generate a synthetic query image including the plurality of objects; and
an image retrieval step of retrieving an image similar to the synthetic query image based on the synthetic query image.
